# EUROPEAN PATENT SPECIFICATION

(11) **EP 2 404 849 B1**
(45) Date of publication and mention of the grant of the patent: **28.08.2013**
(21) Application number: 10425227.5
(22) Date of filing: 05.07.2010
(51) Int. Cl.: B65G 47/14

(54) **Object orienting device**
Objektausrichtungsvorrichtung
Dispositif d'orientation d'objets

(43) Date of publication of application: 11.01.2012
(73) Proprietor: BONINO S.p.A. con unico azionista, 15100 Alessandria (IT)
(72) Inventor: Gasparini, Enrico Maria, 15121 Alessandria (IT); Bonino, Alessandro, 15121 ALESSANDRIA (IT)
(74) Representative: Leihkauf, Steffen Falk

(56) References cited:
- EP-A1- 0 327 992
- EP-A1- 0 629 571
- EP-A1- 1 127 834
- EP-A1- 1 557 380
- EP-A1- 2 295 350
- GB-A- 904 634
- US-A- 3 791 553
- US-A- 4 825 995
- US-A- 5 236 077
- US-A- 5 826 696

## Description

The present invention relates in general to object orienting systems, and in particular to an orienting machine for arranging a plurality of objects having the same shape in a succession and with a predetermined orientation.

Such orienting systems are usually used in production, processing, assembly, packaging or similar lines for industrial or consumable products in order to allow the feeding of components, parts, products (hereinafter referred to as "objects") with the orientation required by the subsequent treatment or processing step.

In order to meet the requirements of an automated industrial production, object orienting systems must on the one side ensure a high object orienting speed and on the other side they must be capable of also orienting objects of a highly irregular shape, for example plugs or spout-plug units having symmetrically or asymmetrically protruding portions.

Orienting machines are known, comprising a succession of orienting seats movable along a handling path, wherein each orienting seat is suitable for respectively receiving one of such objects both in a desired vertical orientation and in a vertical orientation other than that desired, a feeder that conveys said objects in said orienting seats in an initial point of the handling path, a compressed air ejection blower that addresses a compressed air jet towards the objects seated in the orienting seats so as to eject the objects with a vertical orientation other than that desired from the orienting seat, as well as transport means that pick up the objects with desired vertical orientation from the orienting seats, downstream of the handling path.

Such known vertical orienting machines, usually made with rotary machines with a circular crown that forms such orienting seats (sometimes called sectors) reach high orienting speeds (about 300 objects a minute) but they have the drawback that only a limited amount of objects drops properly oriented into the orienting seats. Objects not properly oriented into the seats are then ejected, leaving the respective seat empty and thus limiting the actual orientation speed intended as number of parts oriented per minute.

EP 0 629 571 A1 discloses such an orienting machine. US 3 791 553 A1 discloses an orienting device according to the preamble of claim 1. EP 2 295 350 A1 is a relevant document under Article 54(3) EPC.

The object of the present invention therefore is to provide an object orienting device having such features as to obviate the drawbacks mentioned with reference to the prior art.

Within the scope of the general object, a particular object is to provide an object orienting device that favours an insertion of the objects with a mainly proper orientation into the seats.

A further object of the present invention is to provide an object orienting device having such features as to prevent the accidental escape of properly oriented objects from the seats.

Yet a further object of the invention is to adjust and/or maintain, besides the proper vertical orientation (top-bottom) of the object, also a further orientation thereof, in particular an angular orientation around a vertical axis.

These and other objects are achieved by an orienting device according to claim 1.

Thanks to the seating tracks, the objects are aligned relative to the orienting seats during the drop thereof into them. This greatly increases the number of objects properly received into the seats compared to the number of objects that must be ejected, and therefore the orienting speed.

Advantageous embodiments are the object of the dependent claims.

To better understand the invention and appreciate its advantages, some exemplary non-limiting embodiments thereof shall now be described with reference to the annexed figures, wherein:

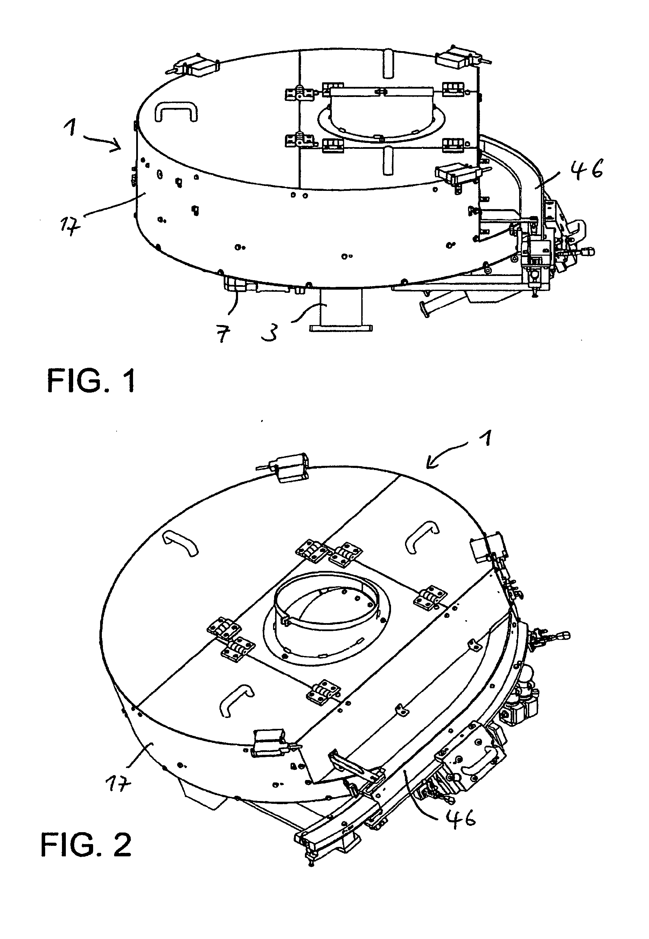

figure 1 shows a perspective side view of an orienting device according to the invention,

figure 2 shows a perspective top view of the orienting device of figure 1,

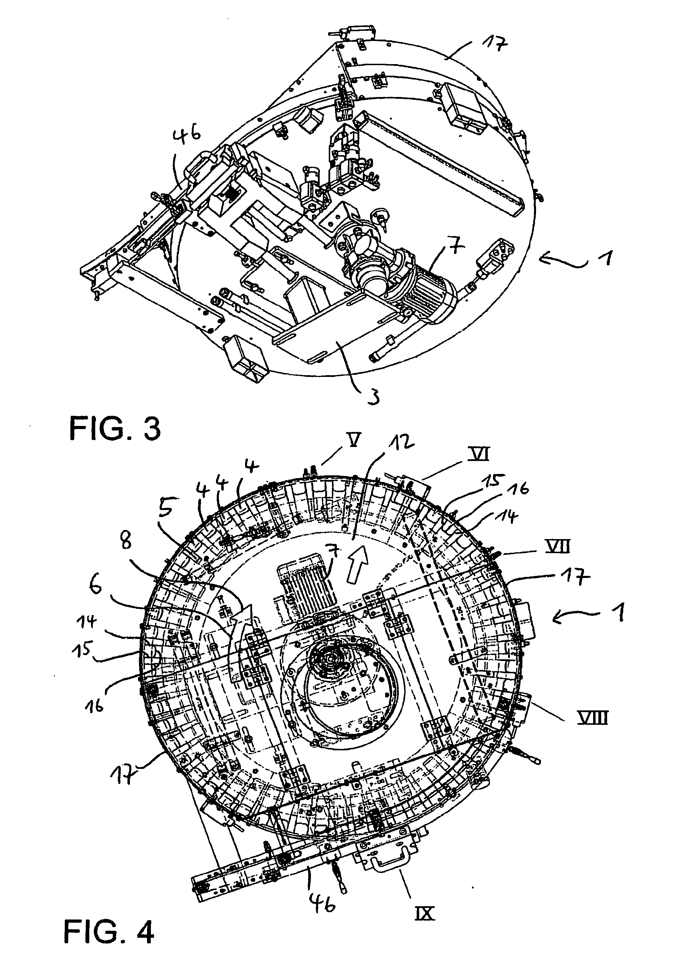

figure 3 shows a perspective bottom view of the orienting device of figure 1,

figure 4 shows a top view of the orienting device of figure 1, without cover,

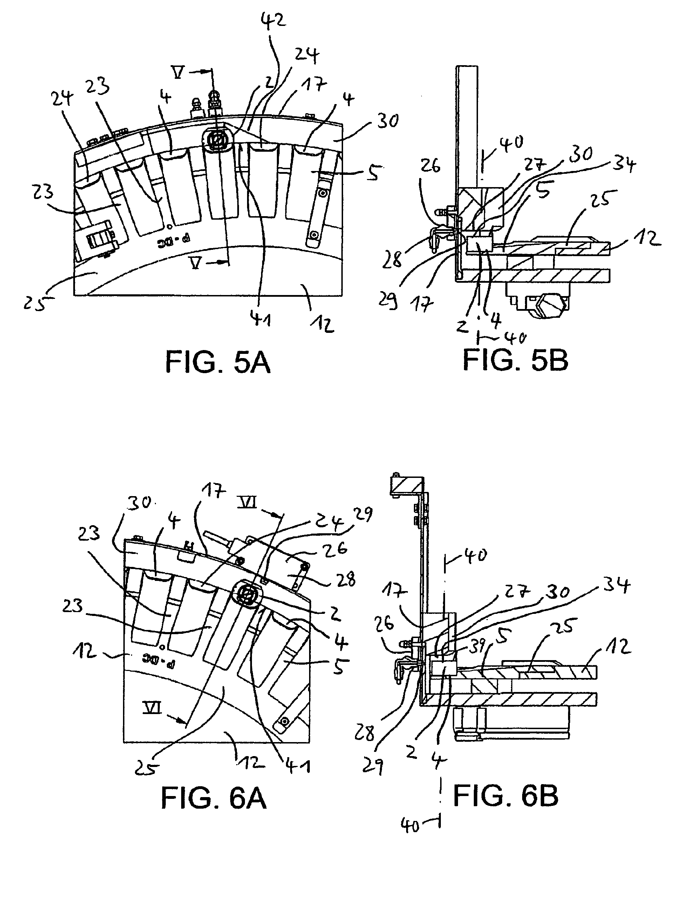

figure 5A shows an enlarged view of detail V of figure 4,

figure 5B shows a partly enlarged cutaway view along line V-V of figure 4,

figure 6A shows an enlarged view of detail VI of figure 4,

figure 6B shows a partly enlarged cutaway view along line VI-VI of figure 4,

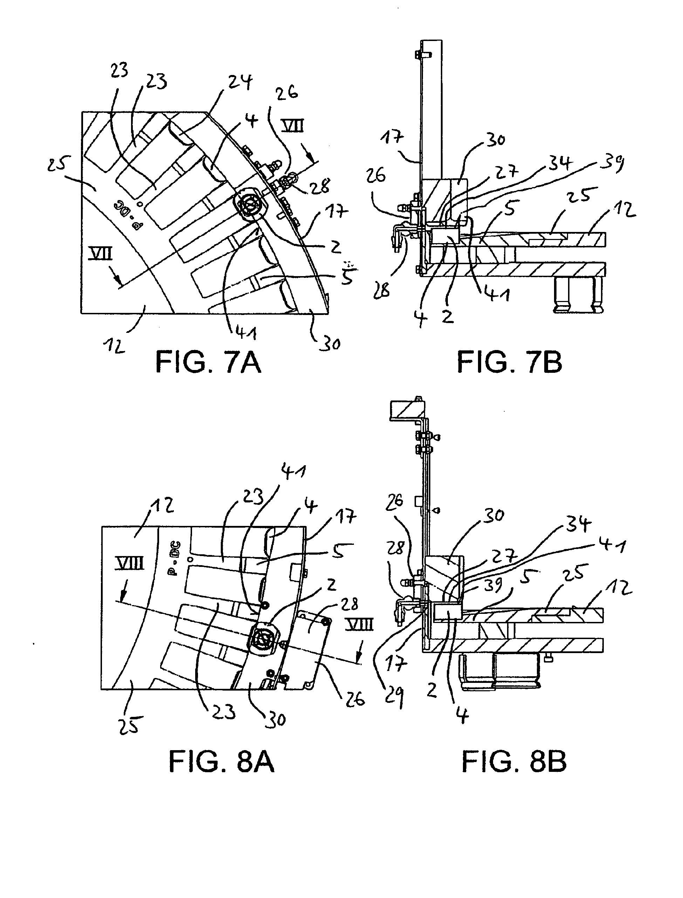

figure 7A shows an enlarged view of detail VII of figure 4,

figure 7B shows a partly enlarged cutaway view along line VII-VII of figure 4,

figure 8A shows an enlarged view of detail VIII of figure 4,

figure 8B shows a partly enlarged cutaway view along line VIII-VIII of figure 4,

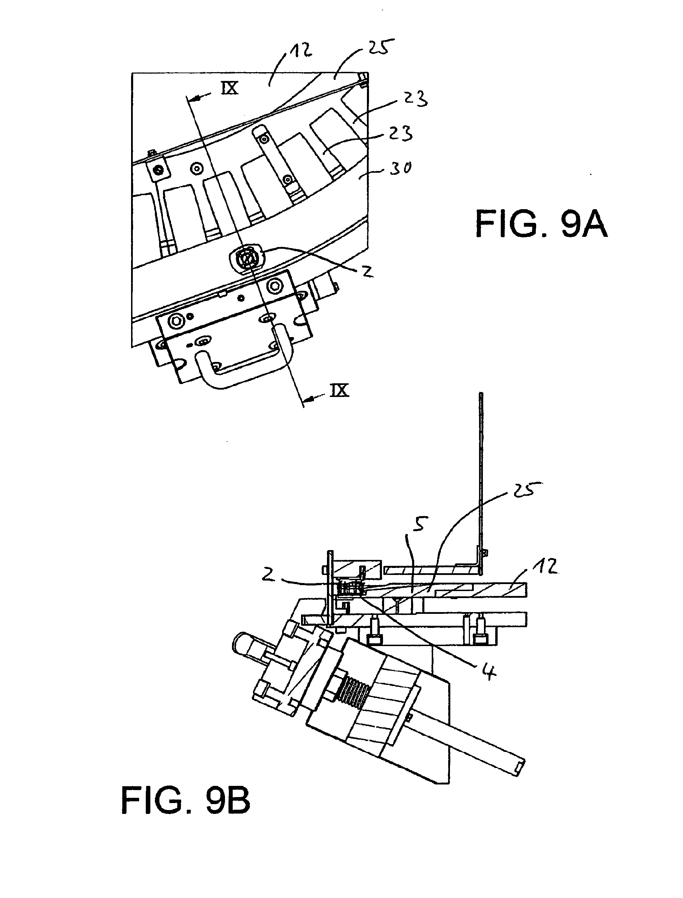

figure 9A shows an enlarged view of detail IX of figure 4,

figure 9B shows a partly enlarged cutaway view along line IX-IX of figure 4,

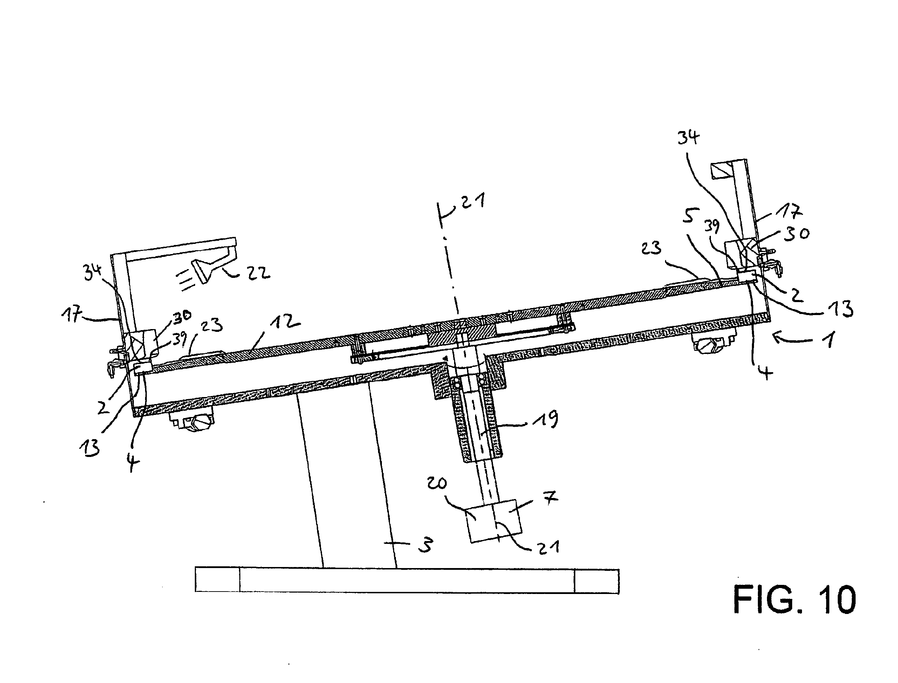

figure 10 shows a radial section view according to line X-X in figure 4,

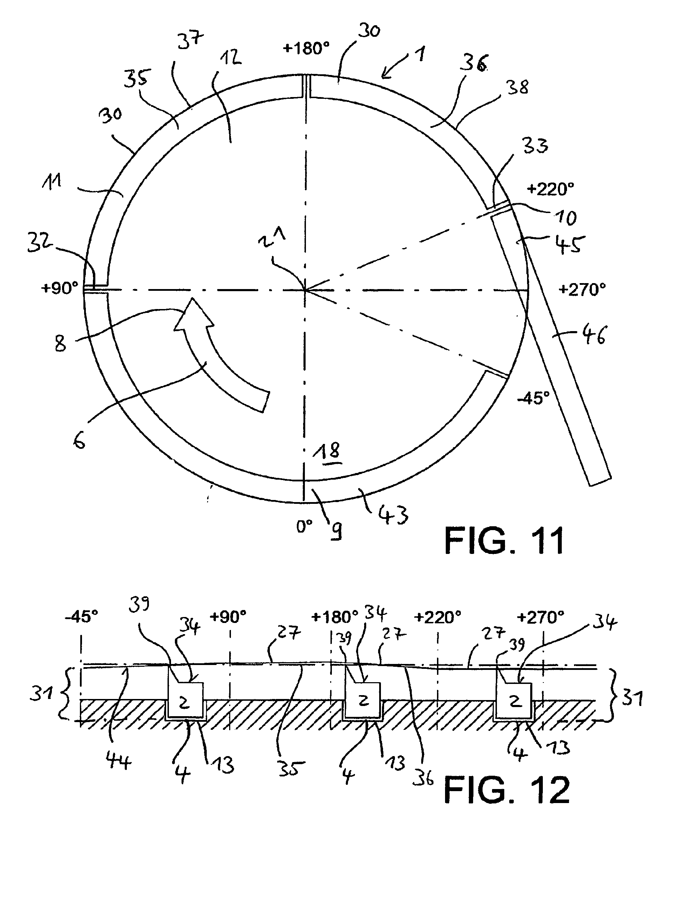

figure 11 shows a schematised view of the orienting device according to an embodiment of the invention,

figure 12 shows the profile of an escape-preventing surface along a handling path of the objects to be oriented, according to an embodiment of the invention,

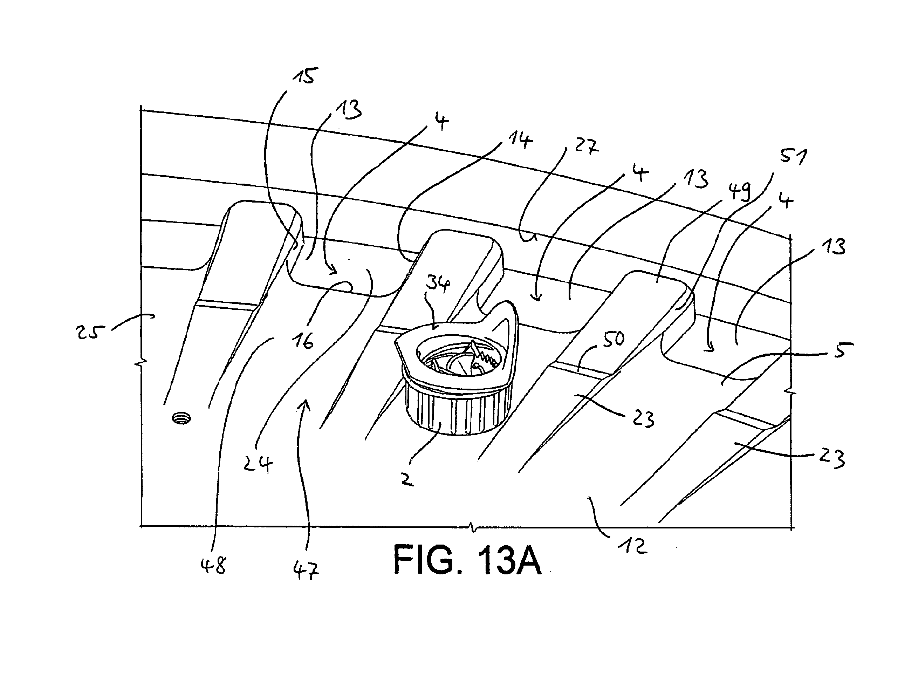

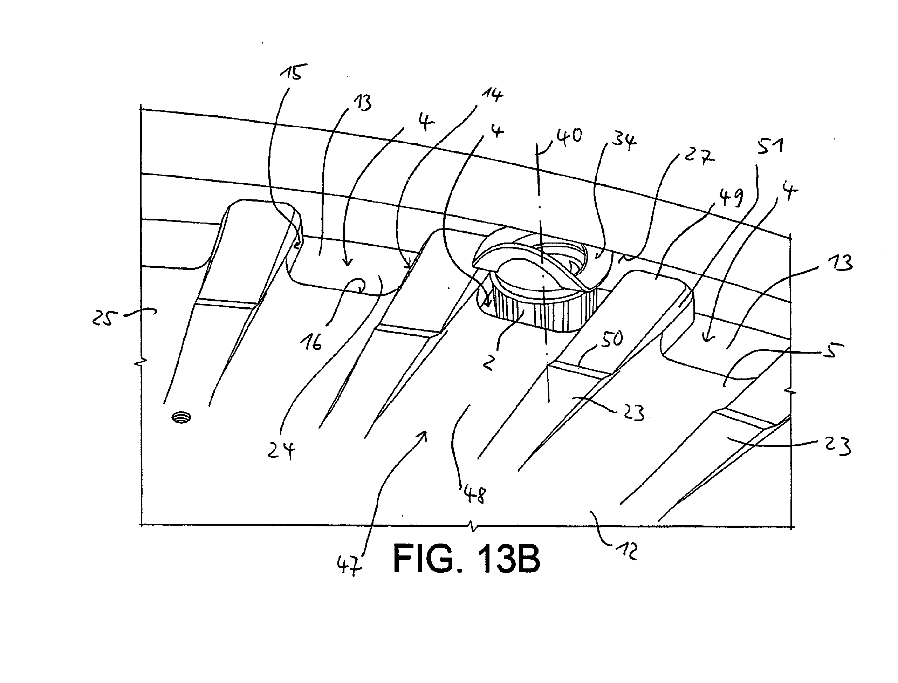

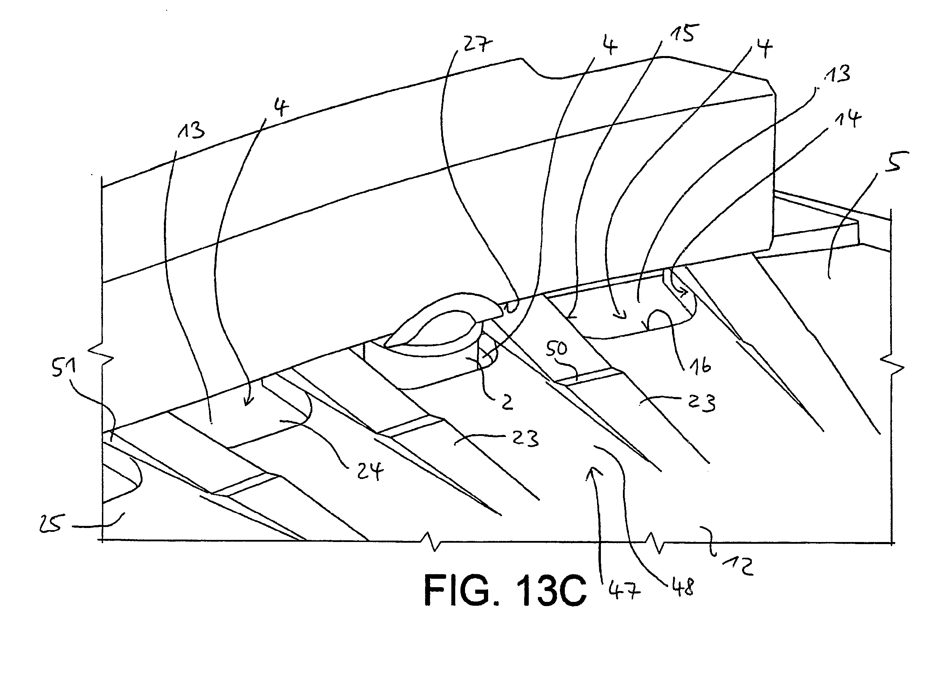

figures 13A, 13B and 13C show a conveying sequence of an object in the orienting seat through seating tracks according to an embodiment of the invention.

With reference to the figures, an orienting device 1 for orienting objects 2 comprises a support structure 3, a succession of orienting seats 4 wherein every single orienting seat 4 is suitable for receiving a single object 2, a seat support 5 connected to the support structure 3 and carrying the succession of orienting seats 4 wherein such seat support 5 defines a handling path 6 of objects 2, as well as means 7 for moving the succession of orienting seats 4 in a movement direction 8 along the handling path 6. The handling path 6 is delimited upstream by a feeding point or portion 9 of objects 2, downstream by a removal point 10 of objects 2, and comprises an orienting portion 11, arranged downstream of the feeding point 9 with reference to the movement direction 8.

The orienting device 1 further comprises orienting means 26, arranged along the orienting portion 11 and configured so as to eject the objects having an orientation other than the orientation desired from the orienting seats 4, as well as a plurality of seating tracks 47 integral with the orienting seats 4, wherein each seating track 47 comprises a channel 48 aligned with and leading into respectively one of the orienting seats 4, as well as two side guiding walls 23 that prevent the escape of object 2 from channel 48 when it slips into seat 4.

According to the invention, the seat support 5 is configured as a support ring 5 extended along an outer circumference of a rotating plate 12 and preferably connected to the latter.

The single orienting seats 8 are delimited by a seat bottom 13 whereon object 2 rests due to the gravitational force, as well as side surfaces 14, 15, 16, in particular a front surface 14 delimiting the orienting seat 4 in the movement direction 8, a back surface 15 opposite the front surface 14 and a first side surface 16 delimiting the orienting seat 4 in the radially inner direction with reference to the axis of rotation 21 of the rotating plate 12.

In order to delimit the orienting seats 8 on the radially outer side thereof as well, a side wall 17 is provided, extended circumferentially substantially along the entire handling path 6 and connected in a stationary manner to the support structure 3. A radially inner surface and facing the orienting seats 4 of the side wall 17 is suitable for delimiting the orienting seats 4 in the direction opposite the first side surface 16, that is, on a radially outer side thereof.

The feeding of objects 2 in the handling path 6 takes place through the rotating plate 12 arranged radially inside the side wall 17 and configured so as to form, **together** with such side wall 17, a collecting space 40 for collecting loose objects 2 to be oriented. The rotating plate 12 is preferably inclined and connected to a shaft 19 of a motor 20 fixed to the support structure 3. Motor 20 is suitable for turning the rotating plate 12 **together** with the succession of orienting seats 2 so as to feed objects 2 into the orienting seats 4 and moving the orienting seats 4 along the handling path 6.

Thanks to the inclination of the rotating plate 12, loose objects 2 tend to build up in a lowest point thereof that forms the feeding point or portion 9 of the handling path 6 where the single objects 2 fall into seats 4.

A pneumatic blower 22 (also called pneumatic comb 22) may further be provided, connected to the support structure 3, and configured for pushing objects 2 along the seating tracks 47 into seats 4.

The seating tracks 47, together with at least a part of the same seats 4 (preferably together with the bottom 13, front 14, back 15 and inside 16 surfaces of seats 4) are integrally made (in a single piece) for forming guiding and seating sectors 25 that facilitate and speed up replacement and assembly.

Such guiding and seating sectors 25 are preferably made of a synthetic material, for example polyethylene, or aluminium, and they are removably connected in a replaceable manner to the outside periphery of the rotating plate 12, for example by screws.

According to an embodiment, each one of the single guiding and seating sectors 25 forms a plurality of seats 4 with the respective seating tracks 47 and the handling path 6 is formed of a plurality of such sectors 25 each having, for example, an angular extension of 45° or 90°.

In this way, the production costs of sectors 25 and the overall dimensions thereof during transport and assembly are reduced.

According to an embodiment, channels 48 have substantially constant width along the entire length thereof and preferably substantially equal to the width (extension in the direction of the handling path or in other words, tangent extension relative to the rotation axis 21 of the rotating plate 12) of seats 4.

This allows arranging the proper space for a single properly oriented object 2, for example a plug or a spout-plug unit, preventing the concurrent insertion of two objects 2 into the same seat 4.

According to a further embodiment, the height of the side guiding walls 23 increases towards seats 4 and preferably, the radially outer end portions 49 of the guiding walls 23 form the front 14 and back 15 surfaces of seats 4.

Bottom 13 of seats 4 is lowered relative to the bottom of channels 48 at the inlet of the same seats and advantageously, a top portion of the front 14 and back 15 surfaces of seats 4 (those formed of the end portion of the guiding walls 23) is chamfered such as to form a funnel zone 51 that favours the proper orientation of objects 2 during the drop thereof into seats 4.

Moreover, it is possible and advantageous to provide a step 50, preferably on the top surface, of the guiding wall 23, which divides wall 23 into a first radially inner portion and a second radially outer portion and at which step 50 the chamfering of the funnel zone 51 starts.

Such step lowers the radially outer portion of the guiding walls 23, increasing the free gap between the upper edge of the guiding walls 23 and an escape-preventing surface or shimming wall (which shall be described hereinafter), so as to also allow objects 2 arranged on the guiding walls 23 to insert into seats 4.

As is generally known, the orientation of objects 2 is carried out along the orienting portion 11 of the handling path 6, which extends between the feeding point 9 and the object removal point 10.

The orienting means 26 preferably comprise one or more compressed air ejection blowers 28, connected in a stationary manner to the support structure 3 (preferably to the circumferential side wall 17) or to the seat support 5, and configured so as to eject objects 2 with an orientation other than the orientation desired from seats 4.

To this end, the walls of seats 4 and/or the circumferential side wall 17 may have access windows 29 suitable for allowing access of the compressed air jet to objects 2 and they have such shape that the compressed air jet mainly ejects only objects 2 with an orientation other than that desired.

According to an embodiment of the invention, an escape-preventing surface 27 may be provided, extended along a portion of the handling path 6 and arranged above the orienting seats 4 at such a height as to prevent a complete escape upwards of the objects 2 having said desired orientation from the orienting seats 4. This advantageously reduces the number of properly oriented objects accidentally escaped from their seats 4.

The escape-preventing surface 27 may be facing the access opening 24 of the orienting seats 4 and may be formed on a bottom side of an escape-preventing wall 30 connected to the circumferential side wall 17.

The escape-preventing wall 30 with the escape-preventing surface 27 extends between the end of the feeding portion 9 and the object removal point 10 of the handling path 6, preferably from the end of the feeding portion 9 up to the object removal point 10 of the handling path 6.

According to an embodiment, the feeding portion 9 extends in a range between about -45° and about + 90° and the object removal point 10 may be made at about + 220° as seen in the movement direction 8 relative to the lowest point (initial point of the handling path 0°) of the object collection space 18. As a consequence, the escape-preventing surface 27 preferably extends in a range from about + 90° to about + 220° of the handling path 6.

Advantageously, height 31 of the escape-preventing surface 27, or the vertical distance thereof from bottom 13 of the orienting seats 4 decreases in the movement direction 8, gradually or at discrete steps, from an initial end thereof 32 to a final end 33, so that the escape-preventing surface 27 gradually or at discrete steps approaches a surface 34 of object 2 facing upwards (when the object is properly oriented), as seat 4 with the same object 2 approaches the object removal point 10. In this way, the constraint of object 2 properly oriented into seat 4 increases with the separation of seat 4 from the object collection space 18, thus preventing undesired sticking and wedging of loose objects partly seated into seats 4 in the most crowded zones and the undesired escape of properly oriented objects in the portions of the handling path 6 free from sticking and wedging hazards.

According to an embodiment, the escape-preventing surface 27 comprises a first portion 35 extending from the initial end 32 in the movement direction 8 and having a height 31 (distance from the bottom of the orienting seats 4) substantially constant and a second portion 36 extending between the first portion 35 and the object removing point 10, preferably from the first portion 35 to the object removal point 10 and having a height 31 (distance from the bottom of the orientation seats 4) gradually decreasing in the movement direction 8.

Preferably, the first portion 35 is longer than the second portion 36, for example the first portion 35 may extend from about +90° up to about +180° and the second portion 36 may extend from about +180° to about +220° relative to the lowest point (0°) of the object collection space 18.

According to an embodiment, the escape-preventing wall 27 comprises a plurality of different portions, separately manufactured and individually connectable to the support structure 3, for example a first portion 37 that forms the first portion 35 of the escape-preventing surface 27 and a second portion 38 that forms the second portion 36 of the escape-preventing surface 27.

This facilitates the component transport and assembly and allows the use for example of a same portion of wall with escape-preventing surface at a constant height together with different wall portions with escape-preventing surface at a variable height for orienting different objects.

According to an embodiment, an auxiliary orienting surface 41 may be provided, preferably formed in the escape-preventing wall 30 and extended along at least one portion of the handling path.

The auxiliary orienting surface 41 is transverse or inclined relative to the escape-preventing surface 27 and configured for contacting a projection 39 of object 2 (preferably a portion 39 projecting upwards when object 2 in seat 4 is properly oriented) and turning or tilting the object in a desired manner during the advance of seat 4 with object 2 in the moving direction 8.

Such further rotation or inclination of object 2 preferably takes place around a further orientation axis 40, for example a vertical axis considering the "up-down" orientation through the ejection with a first orientation about a horizontal axis.

In an initial point 42 of the auxiliary orienting surface 41 there may be formed a seating track suitable for engaging such projections 39 irrespective of their instant position and guiding them towards the desired position thereof.

Upstream of the escape-preventing wall 30 there is preferably provided a shimming wall 43 defining a shimming surface 44 arranged above the access opening 24 of the orienting seats 4 and extended along an initial portion of the handling path 6, that is between the start and the end of the feeding portion 9, for example from about -45° to about +90° relative to the lowest or initial point 0°.

The shimming surface 44 is configured for preventing the stacking of multiple objects 2 on a single orienting seat 4.

In order to prevent sticking and wedging of objects in the feeding zone, height 31 of the shimming surface 44 (that is, the distance thereof from bottom 13 of the orienting seats 4 gradually increases in the movement direction 8.

Advantageously, in the connection or transition point between the shimming surface 44 and the escape-preventing surface 27 they have the same height 31 for favouring a passage with geometrical continuity.

According to an embodiment, the shimming wall 43 may be formed integrally with at least one portion of the escape-preventing wall 30 and the initial point 42 with seating track of the auxiliary orienting surface 41 may also be formed in the shimming wall 43.

According to an embodiment, the auxiliary orienting surface is formed in a groove extended along a portion of the handling path 6.

According to an embodiment, the orienting device 1 comprises extraction means 45, suitable for engaging the oriented objects 2 and removing them from device 1 in the removal point 10 of the handling path 6. Such extraction means 45 may comprise a conveyor 46, which for example comprises a conveyor belt or a chute as well as guiding walls, shaped so as to retain the orientation of the previously oriented objects 2 during the removal thereof from the orienting device 1.

The invention may advantageously be implemented in different machines for processing objects with an industrial interest, such as for example plastic moulded parts, metal objects, vegetal products or food.

It is clear that a man skilled in the art may make several changes and adjustments to the orienting device 1 according to the present invention in order to meet specific and incidental needs, all falling within the scope of protection of the invention as defined in the following claims.

## Claims

1. Orienting device (1) for orienting objects (2), comprising:
- a support structure (3),
- a side wall (17) connected to the support structure,
- a rotating plate (12) arranged radially in side the side wall (17) and forming together with the side wall (17) a collecting space (40) for collecting loose objects (2),
- a succession of orienting seats (4) delimited by a seat bottom (13) whereon the object (2) rests due to the gravitational force, as well as by side surfaces (14, 15, 16),
wherein each single orienting seat (4) is suitable for receiving a single object (2),
- a support ring extended along an outer circumference of the rotating plate (12) and connected to the support structure (3), said support ring (5) carrying the succession of orienting seats (4) and defining a handling path (6) of the objects (2),
- means for moving the succession of orienting seats (4) in a movement direction (8) along the handling path (6),
- means (26) arranged along the handling path (6) and configured so as to eject from the orienting seats (4) the objects (2) having an orientation other than the desired orientation
- a plurality of seating tracks (47) provided in an outer periphery of said rotating plate, said seating tracks (47) being integral with the orienting seats (4), wherein each seating track (47) comprises a channel (48) aligned with and leading into one of said orienting seats (4) and two side guiding walls (23), wherein said seating tracks (47), together with at least a part of the same seats (4) are made integral for forming guiding and seating sectors (25), the orienting device being **characterized in that** said seat bottom (13) of the orienting seats (4) is lowered relative to a bottom of the channels (48) at an inlet of the orienting seats (4)
- and wherein said guiding and seating sectors (25) are connected removably and in a replaceable manner to the outer periphery of the rotating plate (12).

2. Device (1) according to claim 1, wherein each one of the single guiding and seating sectors (25) forms a plurality of seats (4) with the respective seating tracks (47) and the handling path (6) is formed of a plurality of such sectors (25).

3. Device (1) according to any one of the previous claims, wherein said channels (48) have a substantially constant width along the entire length thereof.

4. Device (1) according to claim 3, wherein said channels (48) have a width substantially equal to the width of the orienting seats (4).

5. Device (1) according to any one of the previous claims, wherein the height of the side guiding walls (23) increases towards the seats (4).

6. Device (1) according to any one of the previous claims,wherein radially outer end portions (49) of the guiding walls (23) form the front (14) and back (15) surfaces of the seats (4).

7. Device (1) according to the previous claims, wherein a top portion of the front (14) and back (15) surfaces of the seats (4) formed by end portions of said guiding walls (23) is chamfered such as to form a funnel zone (51).

8. Device (1) according to any one of the previous claims, wherein each guiding wall (23) comprises a step (50) that divides the guiding wall (23) into a first radially inner portion and a second radially outer portion.

9. Device (1) according to claims 7 and 8 in combination, wherein the chamfering of the funnel zone (51) extends from the step (50) radially outwards.

10. Device (1) according to any one of the previous claims, comprising an escape-preventing surface (27) extended along a portion of the handling path (6) and arranged above the orienting seats (4) at such a height as to prevent the objects (2) received in the orienting seats (4) with the desired orientation from completely escaping upwards from the orienting seats (4).

11. Device (1) according to anyone of the previous claims, wherein the means (26) for ejecting the objects from the orientation seats (4) comprise one or more compressed air ejection blowers (28), connected to the support structure (3) and the walls of the orienting seats (4) have access windows (29) which allow access of a compressed air jet by the ejection blowers (28) tothe objects (2) and said walls of the orienting seats (4) have such a shape that the compresses air jet mainly ejects only objects (2) with an orientation other than said desired orientation.

12. Device (1) according to any one of the previous claims, wherein said channels (48) extend in radial direction with respect to a rotation axis (21) of the rotating plate (12).

## Patentansprüche

1. Ausrichtungsvorrichtung (1) zum Ausrichten von Objekten (2), welche umfasst:
- eine Trägerstruktur (3),
- eine Seitenwand (17), die mit der Trägerstruktur verbunden ist,
- eine Drehscheibe (12), die radial innerhalb der Seitenwand (17) angeordnet ist und zusammen mit der Seitenwand (17) einen Sammelraum (40) zum Sammeln von losen Objekten (2) bildet,
- eine Aufeinanderfolge von Ausrichtungssitzen (4), die durch einen Sitzboden (13), worauf das Objekt (2) aufgrund der Schwerkraft liegt, sowie durch Seitenflächen (14, 15, 16) begrenzt sind, wobei jeder einzelne Ausrichtungssitz (4) zur Aufnahme eines einzelnen Objekts (2) geeignet ist,
- einen Trägerring (5), der sich entlang einem Außenumfang der Drehscheibe (12) erstreckt und mit der Trägerstruktur (3) verbunden ist, wobei der Trägerring (5) die Aufeinanderfolge von Ausrichtungssitzen (4) trägt und einen Behandlungsweg (6) der Objekte (2) definiert,
- Mittel zum Bewegen der Aufeinanderfolge von Ausrichtungssitzen (4) in einer Bewegungsrichtung (8) entlang dem Behandlungsweg (6),
- Mittel (26), die entlang dem Behandlungsweg (6) angeordnet und konfiguriert sind, um die Objekte (2), die eine andere Ausrichtung als die gewünschte Ausrichtung haben, aus den Ausrichtungssitzen (4) auszuwerfen,
- eine Mehrzahl von Sitzbahnen (47), die in einem Außenumfang der Drehscheibe vorgesehen sind, wobei die Sitzbahnen (47) mit den Ausrichtungssitzen (4) integriert sind, wobei jede Sitzbahn (47) einen Kanal (48), der mit einem der Ausrichtungssitze (4) fluchtet und in diesen führt, und zwei Seitenführungswände (23) aufweist, wobei die Sitzbahnen (47), zusammen mit einem Teil derselben Sitze (4) zur Bildung von Führungs- und Sitzsektoren (25) einstückig gemacht sind, wobei die Ausrichtungsvorrichtung **dadurch gekennzeichnet ist, dass** der Sitzboden (13) der Ausrichtungssitze (4) relativ zu einem Boden der Kanäle (48) am Einlass der Ausrichtungssitze (4) abgesenkt ist, und wobei die Führungs- und Sitzsektoren (25) mit dem Außenumfang der Drehscheibe (12) entfernbar und austauschbar verbunden sind.

2. Vorrichtung (1) nach Anspruch 1, wobei ein jeder der einzelnen Führungs- und Sitzsektoren (25) mit den jeweiligen Sitzbahnen (47) eine Mehrzahl von Sitzen (4) bildet, und der Behandlungsweg (6) aus einer Mehrzahl dieser Sektoren (25) gebildet ist.

3. Vorrichtung (1) nach einem der vorhergehenden Ansprüche, wobei die Kanäle (48) entlang deren Gesamtlänge eine im Wesentlichen konstante Breite haben.

4. Vorrichtung (1) nach Anspruch 3, wobei die Kanäle (48) eine Breite haben, die im Wesentlichen gleich der Breite der Ausrichtungssitze (4) ist.

5. Vorrichtung (1) nach einem der vorhergehenden Ansprüche, wobei die Höhe der Seitenführungswände (23) zu den Sitzen (4) hin zunimmt.

6. Vorrichtung (1) nach einem der vorhergehenden Ansprüche, wobei radial äußere Endabschnitte (49) der Führungswände (23) vordere (14) und hintere (15) Oberflächen der Sitze (4) bilden.

7. Vorrichtung (1) nach dem vorherigen Anspruch, wobei ein oberer Abschnitt der vorderen (14) und hinteren (15) Oberflächen der Sitze (4), die durch Endabschnitte der Führungswände (23) gebildet sind, zur Bildung einer Trichterzone (51) abgeschrägt ist.

8. Vorrichtung (1) nach einem der vorhergehenden Ansprüche, wobei jede Führungswand (23) eine Stufe (50) aufweist, die die Führungswand (23) in einen ersten radial inneren Abschnitt und einen zweiten radial äußeren Abschnitt unterteilt.

9. Vorrichtung (1) nach den Ansprüchen 7 und 8 in Kombination, wobei sich die Abschrägung der Trichterzone (51) von der Stufe (50) radial auswärts erstreckt.

10. Vorrichtung (1) nach einem der vorhergehenden Ansprüche, die eine ein Entweichen verhindernde Oberfläche (27) aufweist, die sich entlang einem Abschnitt des Behandlungswegs (6) erstreckt und oberhalb der Ausrichtungssitze (4) auf einer solchen Höhe angeordnet ist, um zu verhindern, dass die in den Ausrichtungssitzen (4) mit der gewünschten Ausrichtung aufgenommenen Objekte (2) aus den Ausrichtungssitzen (4) vollständig aufwärts entweichen.

11. Vorrichtung (1) nach einem der vorhergehenden Ansprüche, wobei die Mittel (26) zum Auswerfen der Objekte aus den Ausrichtungssitzen (4) ein oder mehrere Druckluftauswurfgebläse (28) aufweisen, die mit der Trägerstruktur (3) verbunden sind, und die Wände der Ausrichtungssitze (4) Zugangsfenster (29) aufweisen, die den Zugang eines Druckluftstrahls von den Auswurfgebläsen (28) auf die Objekte (2) erlauben, und die Wände der Ausrichtungssitze (4) eine solche Form haben, dass der Druckluftstrahl hauptsächlich nur Objekte (2) einer anderen Ausrichtung als die gewünschten Ausrichtung auswirft.

12. Vorrichtung (1) nach einem der vorhergehenden Ansprüche, wobei sich die Kanäle (48) in Bezug auf eine Drehachse (21) der Drehscheibe (12) in radialer Richtung erstrecken.

## Revendications

1. Dispositif d'orientation (1) pour orienter des objets (2), comprenant :
- une structure de support (3),
- une paroi latérale (17) raccordée à la structure de support,
- une plaque rotative (12) agencée radialement à l'intérieur de la paroi latérale (17) et formant conjointement avec la paroi latérale (17), un espace de collecte (40) pour collecter des objets en vrac (2),
- une succession de sièges rotatifs (4) délimités par un fond de siège (13) sur lequel l'objet (2) repose en raison de la force gravitationnelle, ainsi que par des surfaces latérales (14, 15, 16),
dans lequel chaque siège d'orientation unique (4) est approprié pour recevoir un seul objet (2),
- un anneau de support (5) étendu le long d'une circonférence externe de la plaque rotative (12) et raccordé à la structure de support (3), ledit anneau de support (5) portant la succession de sièges d'orientation (4) et définissant une trajectoire de manipulation (6) des objets (2),
- des moyens pour déplacer la succession de sièges d'orientation (4) dans une direction de déplacement (8) le long de la trajectoire de manipulation (6),
- des moyens (26) agencés le long de la trajectoire de manipulation (6) et configurés pour éjecter des sièges d'orientation (4), les objets (2) ayant une orientation différente de l'orientation souhaitée,
- une pluralité de rails de siège (47) prévus dans une périphérie externe de ladite plaque rotative, lesdits rails de siège (47) étant solidaires des sièges d'orientation (4), dans lequel chaque rail de siège (47) comprend un canal (48) aligné avec et menant dans l'un desdits sièges d'orientation (4) et deux parois de guidage latérales (23),
dans lequel lesdits rails de siège (47) conjointement avec au moins une partie des mêmes sièges (4) sont rendus solidaires pour former des secteurs de guidage et de siège (25), le dispositif d'orientation étant **caractérisé en ce que**
ledit fond de siège (13) des sièges d'orientation (4) est abaissé par rapport à un fond des canaux (48), à une entrée des sièges d'orientation (4),
et dans lequel lesdits secteurs de guidage et de siège (25) sont raccordés de manière amovible et remplaçable à la périphérie externe de la plaque rotative (12).

2. Dispositif (1) selon la revendication 1, dans lequel chacun des secteurs de guidage et de siège (25) unique forme une pluralité de sièges (4) avec les rails de siège (47) respectifs et la trajectoire de manipulation (6) est formée avec une pluralité de ces secteurs (25).

3. Dispositif (1) selon l'une quelconque des revendications précédentes, dans lequel lesdits canaux (48) ont une largeur sensiblement constante le long de toute leur longueur.

4. Dispositif (1) selon la revendication 3, dans lequel lesdits canaux (48) ont une largeur sensiblement égale à la largeur des sièges d'orientation (4).

5. Dispositif (1) selon l'une quelconque des revendications précédentes, dans lequel la hauteur des parois de guidage latérales (23) augmente vers les sièges (4).

6. Dispositif (1) selon l'une quelconque des revendications précédentes, dans lequel des parties d'extrémité radialement externes (49) des parois de guidage (23) forment les surfaces avant (14) et arrière (15) des sièges (4).

7. Dispositif (1) selon la revendication précédente, dans lequel une partie supérieure des surfaces avant (14) et arrière (15) des sièges (4) formée par les parties d'extrémité desdites parois de guidage (23) est chanfreinée afin de former une zone d'entonnoir (51).

8. Dispositif (1) selon l'une quelconque des revendications précédentes, dans lequel chaque paroi de guidage (23) comprend un échelon (50) qui divise la paroi de guidage (23) en une première partie radialement interne et en une seconde partie radialement externe.

9. Dispositif (1) selon les revendications 7 et 8 en combinaison, dans lequel le chanfrein de la zone d'entonnoir (51) s'étend à partir de l'échelon (50) radialement vers l'extérieur.

10. Dispositif (1) selon l'une quelconque des revendications précédentes, comprend une surface anti-échappement (27) étendue le long d'une partie de la trajectoire de manipulation (6) et agencée au-dessus des sièges d'orientation (4) à une hauteur telle qu'elle empêche les objets (2) reçus dans les sièges d'orientation (4) avec l'orientation souhaitée de s'échapper complètement vers le haut par des sièges d'orientation (4).

11. Dispositif (1) selon l'une quelconque des revendications précédentes, dans lequel les moyens (26) pour éjecter les objets des sièges d'orientation (4) comprennent une ou plusieurs soufflantes d'éjection d'air comprimé (28) raccordées à la structure de support (3) et les parois des sièges d'orientation (4) ont des fenêtres d'accès (29) qui permettent l'accès d'un jet d'air comprimé par les soufflantes d'éjection (28) aux objets (2) et lesdites parois des sièges d'orientation (4) ont une forme telle que le jet d'air comprimé n'éjecte principalement que les objets (2) avec une orientation différente de ladite orientation souhaitée.

12. Dispositif (1) selon l'une quelconque des revendications précédentes, dans lequel lesdits canaux (48) s'étendent dans une direction radiale par rapport à un axe de rotation (21) de la plaque rotative (12).
